(19) Europäisches Patentamt
European Patent Office
Office européen des brevets

(11) **EP 4 769 835 A1**

(12) **DEMANDE DE BREVET EUROPEEN**

(43) Date de publication:
**01.07.2026 Bulletin 2026/27**

(21) Numéro de dépôt: **25226680.4**

(22) Date de dépôt: **23.12.2025**

(51) Classification Internationale des Brevets (IPC):
*H01Q 3/28* (2006.01)   *H01Q 3/34* (2006.01)
*H01Q 21/06* (2006.01)   *H01Q 21/20* (2006.01)
*H01Q 1/28* (2006.01)

(52) Classification Coopérative des Brevets (CPC):
**H01Q 3/28; H01Q 1/288; H01Q 3/34; H01Q 21/064; H01Q 21/20**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: **23.12.2024 FR 2415064**

(71) Demandeur: **THALES**
**92190 Meudon (FR)**

(72) Inventeurs:
• **LE ROUX, Per-Yann**
  **31037 TOULOUSE CEDEX 1 (FR)**
• **ALKHAT, Florian**
  **31037 TOULOUSE CEDEX 1 (FR)**
• **GIRARD, Thierry, Jean, René**
  **31037 TOULOUSE CEDEX 1 (FR)**

(74) Mandataire: **Lavoix**
  **2, place d'Estienne d'Orves**
  **75441 Paris Cedex 09 (FR)**

(54) **ANTENNE À MODULATION D'AMPLITUDE ET PROCÉDÉ ASSOCIÉ**

(57)     La présente invention concerne une antenne comprenant une pluralité de sources et un module de formation de faisceaux relié aux sources. Chaque source comprend un élément rayonnant (110) avec un axe principal de rayonnement (Xi, Xj) respectif, dont l'inclinaison varie au sein de l'antenne.

Le module de formation de faisceaux est apte à générer et à appliquer une loi de modulation d'amplitude aux éléments rayonnants (110) dépendant du faisceau à former. La loi de modulation d'amplitude comprend un coefficient de modulation d'amplitude pour chaque élément rayonnant (110), de sorte que chaque élément rayonnant (110) émet un signal présentant une amplitude respective égale à une amplitude donnée modulée par le coefficient de modulation d'amplitude correspondant ou reçoit un signal présentant une amplitude respective, le coefficient de modulation d'amplitude correspondant étant appliqué à l'amplitude respective après réception.

L'invention concerne également un procédé d'utilisation associé.

FIG.2

EP 4 769 835 A1

## Description

La présente invention concerne une antenne comprenant une pluralité de sources, chaque source comprenant un élément rayonnant, chaque élément rayonnant présentant un axe principal de rayonnement respectif.

L'antenne selon l'invention est prévue pour être utilisée au sein d'une constellation satellitaire, par exemple à une orbite autour de la surface de la terre strictement inférieure à l'orbite géostationnaire.

L'invention concerne en outre un procédé associé.

Il est notamment connu, pour la réalisation de constellations de télécommunication, l'utilisation d'antennes actives sous forme de réseaux plans. Chaque élément d'antenne du réseau présente un axe de rayonnement perpendiculaire au plan du réseau.

Cependant, de telles antennes présentent plusieurs désavantages.

Pour couvrir un large champ de vue en orbite terrestre basse, avec une telle antenne active, la taille de la source est généralement limitée à une dimension de l'ordre de 0,6 fois la longueur d'onde. En réception, pour la bande Ka et une fréquence comprise entre 27,5 GHz et 31 GHz, cela signifie que la source est d'une dimension d'environ 6 mm. Réaliser des sources d'une telle dimension, ayant des performances satisfaisantes et industrialisables, est complexe.

De plus, afin de minimiser les pertes éventuelles entre un amplificateur et l'élément rayonnant, il est préférable de prévoir l'éventuelle chaîne d'amplification au plus près de l'élément rayonnant, de sorte que la faible dimension des sources agencées en un tel réseau complexifie la réalisation de la chaîne d'amplification.

En outre, une antenne comprenant un réseau d'éléments rayonnants de faible maille a plus de risque de présenter un taux d'onde stationnaire actif. Cela risque alors de créer des directions d'aveuglement, dans lesquelles une recombinaison destructive des diagrammes dégrade la directivité. Plus la maille du réseau est fine, plus le risque de rencontrer ce phénomène est important.

Par ailleurs, une telle antenne plane a son optimum de directivité dans son axe perpendiculaire au plan. Plus grand est l'angle de pointage du faisceau, moins bonne est la directivité. Il est classiquement rencontré une perte de l'ordre de -3 dB en bord de couverture. Cela est, par ailleurs, particulièrement gênant dans le cas de constellations à basse ou moyenne orbite terrestre, car les plus petits terminaux sont souvent des antennes plates qui présentent de moins bonne performance à faible élévation utilisateur. Enfin, vu du satellite, plus l'angle de pointage est important, plus la surface couverture par le faisceau est importante. Avec une antenne plane, les moins bonnes performances sont donc au-dessus des plus grandes surfaces et donc là où il y a potentiellement le plus d'utilisateurs.

Enfin, pour pointer un faisceau dans une certaine direction, la méthode standard consiste à appliquer une loi de phase sur le réseau. Cependant, la loi étant calculée pour une fréquence donnée, il est observé que, en bord de bande, le faisceau ne pointe plus où il devrait, la performance dans la direction d'intérêt étant alors dégradée, ce phénomène est appelé strabisme.

Dans le document US 2013/0234890 A1, il est décrit un système d'antenne présentant un réseau d'éléments d'antenne, dans lequel chaque élément d'antenne est commutable entre une pluralité d'états de déphasage.

Cependant, un tel système d'antenne ne permet pas un contrôle précis de la forme du diagramme de rayonnement. Par ailleurs, il est sensible au phénomène de strabisme.

Le but de l'invention est alors de proposer une antenne limitant les désavantages présentés ci-dessus.

A cet effet, l'invention a pour objet une antenne comprenant une pluralité de sources, chaque source comprenant un élément rayonnant, chaque élément rayonnant présentant un axe principal de rayonnement respectif, chaque axe principal de rayonnement respectif présentant une inclinaison avec un axe de référence, l'axe de référence étant commun à la pluralité de sources, l'inclinaison des axes principaux de rayonnement respectifs variant au sein de l'antenne, l'antenne comprenant un module de formation de faisceaux relié aux sources, le module de formation de faisceaux étant apte à contrôler les éléments rayonnants pour former au moins un faisceau,

caractérisé en ce que le module de formation de faisceaux est apte à générer et à appliquer une loi de modulation d'amplitude aux éléments rayonnants, la loi de modulation d'amplitude dépendant du ou des faisceaux à former, la loi de modulation d'amplitude comprenant un coefficient de modulation d'amplitude pour chaque élément rayonnant, de sorte que chaque élément rayonnant émet un signal présentant une amplitude respective égale à une amplitude donnée modulée par le coefficient de modulation d'amplitude correspondant ou reçoit un signal présentant une amplitude respective, le coefficient de modulation d'amplitude correspondant étant appliqué à l'amplitude respective après réception.

La modulation de l'amplitude pour chaque élément rayonnant permet un meilleur contrôle de la forme du diagramme de rayonnement, tout en limitant le phénomène de strabisme et les désavantages d'une antenne plane, dont les axes de rayonnement des éléments rayonnants sont perpendiculaires au réseau plan.

Suivant d'autres aspects avantageux de l'invention, l'antenne comprend une ou plusieurs des caractéristiques suivantes, prises isolément ou suivant toutes les combinaisons techniquement possibles :

- les éléments rayonnants sont agencés tels que les axes principaux de rayonnement sont chacun tangents à une unique courbe tridimensionnelle présentant une symétrie de révolution autour de l'axe de référence, la courbe tridimensionnelle étant représentative d'une fonction polynôme dans tout plan passant par l'axe de référence, ou

les éléments rayonnants sont agencés, de sorte que chaque élément rayonnant est une image par translation parallèlement à l'axe de référence d'un élément rayonnant fictif correspondant, les éléments rayonnants fictifs étant tels que leurs axes principaux de rayonnement sont chacun tangents à une unique courbe tridimensionnelle présentant une symétrie de révolution autour de l'axe de référence, la courbe tridimensionnelle étant représentative d'une fonction polynôme dans tout plan passant par l'axe de référence ;

- le module de formation de faisceaux est apte à générer la loi de modulation d'amplitude en fonction de la direction principale du ou des faisceaux à former ;
- le module de formation de faisceaux est apte à générer et à appliquer une loi de modulation de phase aux éléments rayonnants, la loi de modulation de phase dépendant du ou des faisceaux à former, la loi de modulation de phase comprenant un déphasage pour chaque élément rayonnant, de sorte que chaque élément rayonnant émet un signal présentant le déphasage correspondant ou reçoit un signal auquel est appliqué le déphasage ;
- le module de formation de faisceaux est numérique ;
- l'antenne est apte à générer un faisceau présentant une fréquence comprise entre 1 GHz et 44 GHz ; et/ou
- l'antenne comprend une pluralité de raccords, chaque raccord connectant une source respective à un module, les sources et les raccords étant réalisés par fabrication additive.

L'invention concerne également un procédé d'utilisation d'une antenne telle que définie précédemment, comprenant les étapes suivantes :

- génération d'une loi de modulation d'amplitude par le module de formation de faisceaux pour former au moins un faisceau,
- émission ou réception d'un signal par les éléments rayonnants, et
- application de la loi de modulation d'amplitude générée au signal reçu ou émis à émettre par les éléments rayonnants.

Suivant d'autres aspects avantageux de l'invention, le procédé comprend une ou plusieurs des caractéristiques suivantes, prises isolément ou suivant toutes les combinaisons techniquement possibles :

- le procédé d'utilisation comprend la génération d'une loi de modulation de phase par le module de formation de faisceaux pour former l'au moins un faisceau, et l'application du déphasage correspondant au signal reçu ou émis par chaque élément rayonnant ; et/ou
- une pluralité de faisceaux sont formés simultanément, la loi de modulation d'amplitude générée correspondant à la superposition de sous-lois de modulation d'amplitude pour former chaque faisceau.

L'invention apparaîtra plus clairement à la lecture de la description qui va suivre, donnée uniquement à titre d'exemple non limitatif, et faite en référence aux dessins dans lesquels :

[Fig 1] la figure 1 est une représentation schématique d'un exemple d'antenne selon un mode de réalisation de l'invention,
[Fig. 2] la figure 2 est une vue tridimensionnelle d'un premier exemple d'agencement d'éléments rayonnants d'une antenne selon un mode de réalisation de l'invention,
[Fig 3] la figure 3 est une vue tridimensionnelle d'un deuxième exemple d'agencement d'éléments rayonnants d'une antenne selon un mode de réalisation de l'invention,
[Fig 4] la figure 4 est une représentation tridimensionnelle d'un exemple de zones d'une loi de modulation d'amplitude pour la formation d'un exemple de faisceau, et
[Fig 5] la figure 5 est une vue schématique d'un exemple de module de formation de faisceaux d'une antenne selon un mode de réalisation de l'invention.

L'invention concerne une antenne.

L'antenne est, par exemple, adaptée pour être utilisée à la surface de la terre, montée sur un aéronef ou utilisée dans l'espace, par exemple pour de la télécommunication ou du radar.

L'antenne est apte à générer un faisceau présentant une fréquence comprise entre 1 GHz et 44 GHz.

L'antenne est, par exemple, adaptée pour être utilisée en mode réception ou en mode émission ou en mode émission-réception.

Préférentiellement, l'antenne est adaptée pour être utilisée en mode réception.

Une telle antenne est particulièrement avantageuse pour couvrir un large domaine angulaire, en particulier avec plusieurs faisceaux.

L'antenne est, par exemple, une antenne satellite à une orbite autour de la surface de la terre strictement inférieure à l'orbite géostationnaire.

L'antenne présente, par exemple, un domaine angulaire supérieur ou égal à $\pm 50°$ par rapport à un axe.

Alternativement, l'antenne est, par exemple, utilisée à la surface de la terre, de sorte à suivre plusieurs satellites sur des élévations à partir de 10°.

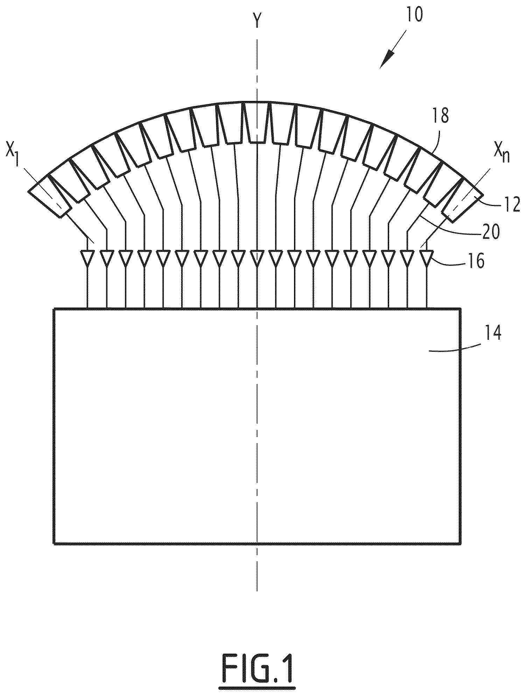

Un exemple d'antenne 10 selon l'invention est représenté sur la figure 1.

L'antenne 10 comprend une pluralité de sources 12 et un module de formation de faisceaux 14.

L'antenne 10 comprend en outre un bloc d'amplification 16 par source 12.

Chaque source 12 est relié au module de formation de faisceaux 14, par exemple par l'intermédiaire du bloc d'amplification 16 respectif.

Les sources 12 forment ensemble un réseau antennaire.

Le réseau antennaire présente une maille, la maille étant comprise entre 0,6 et 1,4 fois une longueur d'onde nominale de l'antenne. La longueur d'onde nominale de l'antenne correspond à une longueur d'onde préférentielle de fonctionnement de l'antenne, par exemple comprise entre 1 GHz et 44 GHz.

Une source est agencée dans chaque maille du réseau.

L'antenne 10 comprend, par exemple, entre 128 et 512 sources.

Chaque source 12 est, par exemple, réalisé en métal, ici, par exemple en aluminium.

Chaque source 12 comprend un élément rayonnant.

Chaque source 12 comprend, par exemple, en outre un polariseur et éventuellement un filtre.

Chaque élément rayonnant est apte à présenter un rayonnement au niveau d'une face avant 18 de la source.

Chaque élément rayonnant est, par exemple, de type cornet, par exemple circulaire. Alternativement, les éléments rayonnants sont de type dipôle, patch ou en forme d'hélices.

Les éléments rayonnants présentent, par exemple, des tailles différentes au sein de l'antenne.

Alternativement, les éléments rayonnants présentent tous la même taille.

Chaque élément rayonnant présente un axe principal de rayonnement respectif X1...Xn.

Chaque axe principal de rayonnement respectif X1...Xn présente une inclinaison avec un axe de référence Y.

L'axe de référence Y est commun à la pluralité de sources.

Chaque axe principal de rayonnement respectif X1...Xn forme avec l'axe de référence Y un angle d'inclinaison.

L'inclinaison des axes principaux de rayonnement respectifs X1...Xn varie au sein de l'antenne, c'est-à-dire que les éléments rayonnants ne présentent pas tous la même inclinaison.

L'agencement des éléments rayonnants présente ici une symétrie de rotation autour de l'axe de référence Y.

Les éléments rayonnants placés à égale distance de l'axe de référence Y présentent, par exemple, des angles d'inclinaison de valeur égale.

Les valeurs des angles d'inclinaison dépendent de la distance entre les éléments rayonnants et l'axe de référence Y.

Plus particulièrement, plus l'élément rayonnant est éloigné de l'axe de référence, plus l'angle d'inclinaison présente une valeur élevée.

Le profil d'inclinaison en fonction de la distance avec l'axe de référence dépend ici du domaine à couvrir et de la taille de la zone à couvrir par le faisceau.

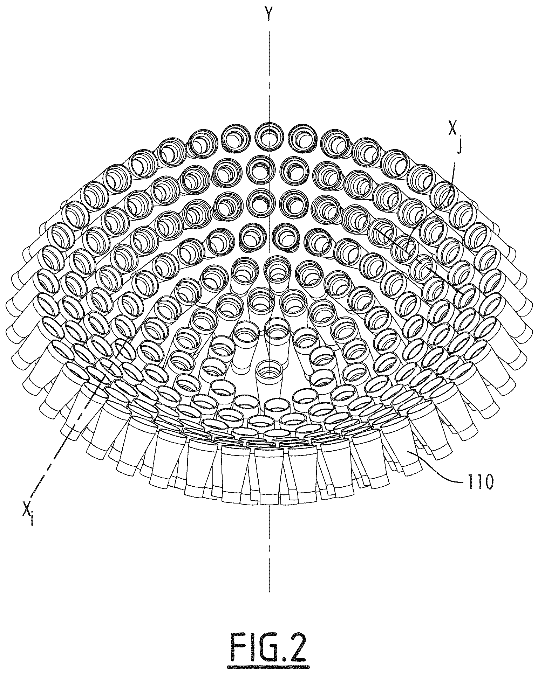

Un premier exemple d'agencement d'éléments rayonnants d'une antenne selon un mode de réalisation de l'invention est représenté sur la figure 2.

Les éléments rayonnants 110 sont agencés tels que les axes principaux de rayonnement Xi, Xj sont chacun tangents à une unique courbe tridimensionnelle.

La courbe tridimensionnelle présente une symétrie de révolution autour de l'axe de référence Y.

La courbe tridimensionnelle est, par exemple, représentative d'une fonction polynôme dans tout plan passant par l'axe de référence Y.

Plus particulièrement, pour tout plan de l'espace passant par l'axe de référence Y, il existe un repère dans lequel la courbe est représentative d'une fonction f de la forme :

$$[Math\ 1]\ (x) = ax^n + b\ ,$$

avec a et b des nombres réels, a étant non nul, et n un entier naturel, plus particulièrement un entier naturel pair.

Les nombres a, b et n sont choisis en fonction de l'utilisation et des performances souhaitées de l'antenne.

Pour chaque source, l'intersection entre l'axe de rayonnement Xi, Xj et la courbe représentative est définie comme le centre de rayonnement de ladite source. Ledit centre de rayonnement est agencé au sein de l'élément rayonnant correspondant.

Ici, les éléments rayonnants 110 sont agencés, de sorte que leurs axes de rayonnement Xi, Xj convergent entre eux en regard de la face avant des sources. Une telle antenne est dite antenne concave.

Alternativement, les éléments rayonnants 110 sont agencés, de sorte que leurs axes de rayonnement Xi, Xj divergent entre eux au niveau de la face avant des sources (comme sur la figure 1). Une telle antenne est dite antenne convexe.

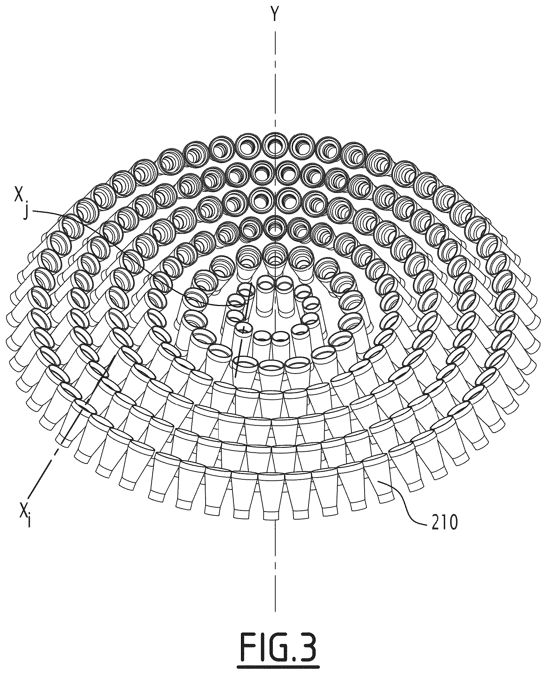

Un deuxième exemple d'agencement d'éléments rayonnants 210 d'une antenne selon un mode de réalisation de l'invention est représenté sur la figure 3.

Les éléments rayonnants 210 sont agencés, de sorte que chaque élément rayonnant est une image par translation parallèlement à l'axe de référence Y d'un élément rayonnant fictif correspondant.

L'inclinaison de chaque élément rayonnant par rapport à l'axe de référence Y est maintenue par translation de l'élément rayonnant fictif.

Les éléments rayonnants fictifs sont tels que leurs axes principaux de rayonnement sont chacun tangents à une unique courbe tridimensionnelle.

La courbe tridimensionnelle présente une symétrie de révolution autour de l'axe de référence.

La courbe tridimensionnelle est représentative d'une fonction f : x-> f(x) dans tout plan passant par l'axe de référence Y.

La courbe tridimensionnelle est, par exemple, représentative d'une fonction polynôme dans tout plan passant par l'axe de référence Y.

Plus particulièrement, pour tout plan de l'espace passant par l'axe de référence, il existe un repère dans lequel la courbe est représentative d'une fonction f de la forme :

$$[\text{Math 2}]\ (x) = ax^n + b\ ,$$

avec a et b des nombres réels, a étant non nul, et n un entier naturel, plus particulièrement un entier naturel pair.

Les nombres a, b et n sont choisis en fonction de l'utilisation et des performances souhaitées de l'antenne.

La distance pour chaque translation dépend de l'élément rayonnant.

Les translations respectives d'éléments rayonnants placés à égale distance de l'axe de référence Y présentent, par exemple, une distance de translation égale entre elles.

La distance de la translation pour chaque élément rayonnant est, par exemple, égale à la valeur absolue de : $\lambda f(x) + \mu$ avec $\lambda$ un nombre compris entre 0 et 1 et $\mu$ un nombre réel, k et $\mu$ étant chacun un nombre commun pour tous les éléments rayonnants, et f(x) la valeur de la fonction de la courbe représentative en l'emplacement de l'élément rayonnant fictif correspondant.

Le sens de la translation est tel que les éléments rayonnants sont agencés sur une courbe tridimensionnelle image présentant localement un rayon de courbure strictement supérieure au rayon de courbure de la courbe tridimensionnelle au niveau de l'élément rayonnant correspondant.

Cela permet notamment de réduire la hauteur du réseau d'éléments rayonnants, en conservant les avantages liés à l'inclinaison des éléments rayonnants. En particulier, les performances en termes de directivité d'une antenne pourvu d'un tel agencement d'éléments rayonnants sont similaires à celles d'une antenne pourvu de l'agencement d'éléments rayonnants décrit en regard de la figure 2.

La translation correspond, par exemple, à une projection de chaque élément rayonnant fictif sur un plan de référence, perpendiculaire à l'axe de référence Y. Le plan de référence est commun à tous les éléments rayonnants 210.

Ici, les éléments rayonnants 210 sont agencés, de sorte que leurs axes de rayonnement Xi, Xj convergent entre eux en regard de la face avant des sources. Une telle antenne est dite antenne concave.

Lorsque les translations correspondent à une projection de chaque élément rayonnant fictif sur un plan de référence, il est, plus particulièrement, dit antenne plane concave.

Alternativement, les éléments rayonnants 210 sont agencés, de sorte que leurs axes de rayonnement Xi, Xj divergent entre eux au niveau de la face avant des sources. Une telle antenne est dite antenne convexe.

Lorsque les translations correspondent à une projection de chaque élément rayonnant fictif sur un plan de référence, il est, plus particulièrement, dit antenne plane convexe.

Le polariseur est relié à l'élément rayonnant correspondant en amont, de sorte que la polarisation du signal de l'élément rayonnant est adaptée selon le polariseur.

Le filtre est relié au polariseur correspondant en amont, de sorte à appliquer un filtre sur le spectre fréquentiel de l'élément rayonnant.

Chaque source 12 est relié au module de formation de faisceaux 14, par exemple par l'intermédiaire du bloc d'amplification 16 respectif.

L'antenne 10 comprend une pluralité de raccords 20, dit réseau dévoyeur.

Chaque raccord 20 connecte une source respective à un module, plus particulièrement un module respectif relié au module de formation de faisceaux 14, plus particulièrement au bloc d'amplification respectif 16.

Chaque raccord 20 est tel que la distance du raccordement entre le module de formation de faisceaux 14 et l'élément rayonnant de chaque source 12 est égale pour l'ensemble des sources 12.

Les sources 12 et les raccords 20 sont, par exemple, fabriqués, par exemple ensemble, par fabrication additive, plus particulièrement en métal, par exemple en aluminium.

Chaque bloc d'amplification 16 comprend au moins un amplificateur faible bruit, plus particulièrement un amplificateur faible bruit par polarisation.

Chaque bloc d'amplification 16 est relié au module de formation de faisceaux 14.

Chaque bloc d'amplification 16 est configuré pour amplifier un signal le traversant, allant de la source 12 au module de formation de faisceaux 14 et/ou du module de formation de faisceaux 14 à la source 12.

Le module de formation de faisceaux 14 est apte à contrôler les signaux provenant des éléments rayonnants en cas de réception, ou émis par les éléments rayonnants en cas d'émission, pour former au moins un faisceau.

Le module de formation de faisceaux 14 est apte à générer et à appliquer une loi de modulation d'amplitude aux signaux provenant des ou émis par les éléments rayonnants, la loi de modulation d'amplitude dépendant du ou des faisceaux à former.

La loi de modulation d'amplitude comprend un coefficient de modulation d'amplitude $\Delta A$ pour chaque élément rayonnant, de sorte que chaque élément rayonnant émet un signal présentant une amplitude respective égale à une amplitude donnée modulée par le coefficient de modulation d'amplitude correspondant ou reçoit un signal présentant une amplitude respective, le coefficient de modulation d'amplitude correspondant étant appliqué à l'amplitude respective après réception.

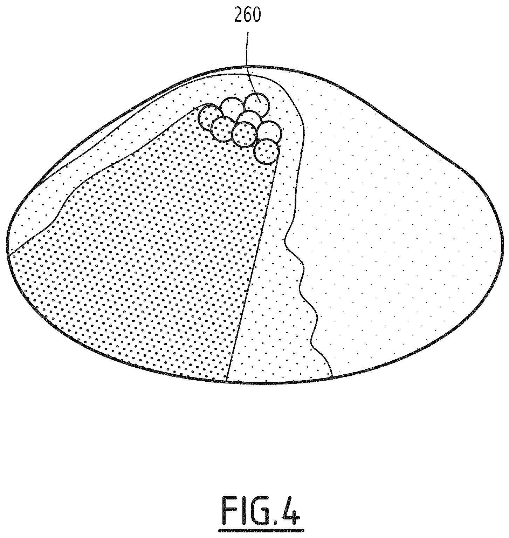

Une représentation d'un exemple de zones d'une loi de modulation d'amplitude est visible sur la figure 4.

A chaque élément rayonnant, est associé un coefficient de modulation d'amplitude.

Dans la représentation de la figure 4, chaque zone concerne un intervalle de valeurs pour le coefficient de modulation d'amplitude.

Les éléments rayonnants 260 d'une même zone sont susceptibles d'avoir des coefficients de modulation d'amplitude différents compris dans l'intervalle correspondant.

Plus l'intervalle correspond à des coefficients de modulation d'amplitude élevés, plus la zone est représenté avec une densité de points élevée.

Sur l'exemple représenté, un faisceau est à former, le faisceau étant dirigé généralement selon l'inclinaison des éléments rayonnants les plus foncés.

Plus particulièrement, dans le mode réception de l'antenne, chaque élément rayonnant reçoit un signal présentant une amplitude respective. Pour chaque élément rayonnant, le coefficient de modulation d'amplitude est appliqué au signal reçu correspondant.

L'application du coefficient de modulation d'amplitude est réalisée par le module de formation de faisceaux, comme cela est décrit ci-après.

Dans le mode émission de l'antenne, chaque élément rayonnant émet un signal présentant une amplitude respective égale à une amplitude donnée modulée par le coefficient de modulation d'amplitude correspondant.

La loi de modulation d'amplitude est, par exemple, fonction de la direction principale du ou des faisceaux à former, de la taille du ou des faisceau à former et/ou de la pureté du ou des faisceaux à former, la pureté étant le niveau de lobe secondaire.

Si plusieurs faisceaux sont à former simultanément en émission (ou transmission), la loi de modulation d'amplitude générée correspond à la superposition de sous-lois de modulation d'amplitude pour former chaque faisceau.

En outre, le module de formation de faisceaux 14 est apte à générer et à appliquer une loi de modulation de phase aux signaux provenant des éléments rayonnants pour la réception ou émis vers les éléments rayonnants en émission, la loi de modulation de phase dépendant du ou des faisceau(x) à former.

La loi de modulation de phase d'un faisceau comprend un déphasage $\Delta\varphi$ pour chaque élément rayonnant, de sorte que pour ledit faisceaux chaque élément rayonnant émet un signal présentant le déphasage correspondant ou reçoit un signal auquel est appliqué le déphasage.

La loi de modulation de phase apporte un degré supplémentaire, par rapport à la modulation d'amplitude, pour améliorer la précision de pointage ou de formation du faisceaux.

La loi de modulation de phase présente une précision, c'est-à-dire une incrémentation maximale entre les différentes valeurs possibles, inférieure ou égale à 2°.

Si plusieurs faisceaux sont à former simultanément en émission (ou transmission), la loi de modulation de phase générée correspond à la superposition de sous-lois de modulation de phase pour former chaque faisceau.

Plus particulièrement, dans le mode réception de l'antenne, chaque élément rayonnant reçoit un signal présentant une phase respective. Pour chaque élément rayonnant, le déphasage est appliqué au signal reçu correspondant.

L'application du déphasage est réalisée par le module de formation de faisceaux.

Dans le mode émission de l'antenne, chaque élément rayonnant émet un signal présentant le déphasage correspondant.

Le module de formation de faisceaux 14 est susceptible d'être numérique ou analogique.

Ici, le module de formation de faisceaux 14 est, par exemple, numérique.

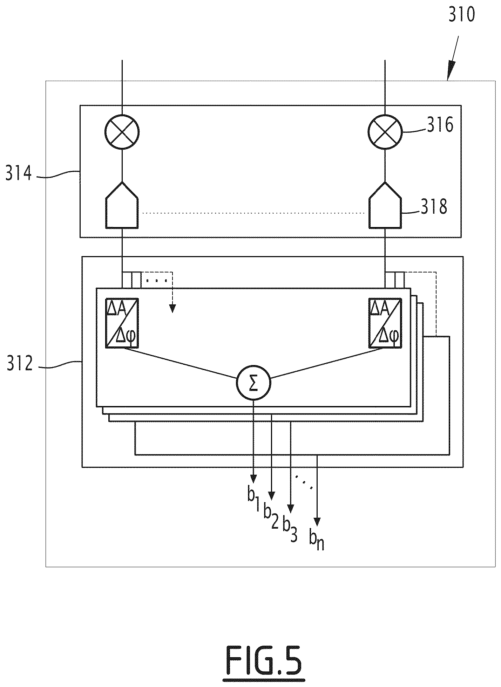

Un exemple de module de formation de faisceaux 310 est représenté sur la figure 5.

Le module de formation de faisceaux 310 comprend, par exemple, un sous-module de traitement 312.

Le module de formation de faisceaux 310 comprend, par exemple, en outre, un sous-module de conversion 314.

Chaque source est reliée au sous-module de traitement 312, par exemple par l'intermédiaire du sous-module de conversion 314.

Le sous-module de conversion 314 comprend, par exemple, un convertisseur de fréquence 316 et/ou un convertisseur analogique numérique 318, plus particulièrement un convertisseur de fréquence 316 et/ou un convertisseur analogique numérique 318 par source.

Le sous-module de conversion 314 comprend ici une voie par source, chaque voie comprenant un convertisseur de fréquence 316 et/ou un convertisseur analogique numérique 318.

Chaque voie est reliée, à une extrémité, à la source correspondante, par exemple par l'intermédiaire du bloc d'amplification, et, à l'autre extrémité, au sous-module de traitement 312.

Le convertisseur de fréquence 316 et le convertisseur analogique numérique 318 sont agencés en série.

Le convertisseur analogique numérique 318 est agencé du côté du sous-module de traitement 312 relativement au convertisseur de fréquence.

Chaque source est reliée à un convertisseur de fréquence 316 et/ou un convertisseur analogique numérique 318 respectif, plus particulièrement à une voie respective.

Le convertisseur de fréquence 316 réalise, par exemple, une conversion de fréquence directe, plus particulièrement en quadrature ou I/Q.

Le convertisseur analogique numérique 318 est apte à convertir un signal analogique depuis une source en un signal numérique vers le sous-module de traitement 312, plus particulièrement en mode réception de l'antenne, et/ou inversement, plus particulièrement en mode émission de l'antenne.

Le sous-module de traitement 312 est apte à générer la loi de modulation d'amplitude, et le cas échéant la loi de modulation de phase, pour chaque faisceau b1, b2, b3...bn à former, et à appliquer la ou lesdites lois au signal reçu en réception, ou alternativement à générer en émission.

Le sous-module de traitement 312 comprend, par exemple, une unité de traitement d'informations formée par exemple d'une mémoire et d'un processeur associé à la mémoire.

Le sous-module de traitement 312 est réalisé sous forme d'un logiciel, ou d'une brique logicielle, exécutable par le processeur. La mémoire est alors apte à stocker le logiciel.

En variante, le sous-module de traitement 312 est réalisé sous forme d'un composant logique programmable, tel qu'un FPGA (de l'anglais *Field Programmable Gate Array*), ou encore d'un circuit intégré, tel qu'un ASIC (de l'anglais *Application Specific Integrated Circuit*).

Lorsque le sous-module de traitement 312 est réalisé sous forme d'un ou plusieurs logiciels, c'est-à-dire sous forme d'un programme d'ordinateur, également appelé produit programme d'ordinateur, il est en outre apte à être enregistré sur un support, non représenté, lisible par ordinateur. Le support lisible par ordinateur est par exemple un medium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple FLASH ou NVRAM) ou une carte magnétique. Sur le support lisible est alors mémorisé un programme d'ordinateur comprenant des instructions logicielles.

Le sous-module de conversion 314 est relié au sous-module de traitement 312.

En réception, le sous-module de conversion 314 est apte à recevoir les signaux reçus par les sources, par exemple amplifiés et/ou filtrés, à les numériser et à les transmettre au sous-module de traitement 312.

En réception, le sous-module de traitement 312 est apte à recevoir les signaux reçus par les sources, ici convertis par le sous-module de conversion 314, et à leur appliquer la loi de modulation d'amplitude, et le cas échéant la loi de modulation de phase, correspondant au(x) faisceau(x) à former.

En émission, le sous-module de traitement 312 est apte à générer la loi de modulation d'amplitude, et le cas échéant la loi de modulation de phase, correspondant au(x) faisceau(x) à former et à émettre un signal correspondant auquel a été appliqué la loi de modulation d'amplitude, et le cas échéant la loi de modulation de phase. Le signal émis par le sous-module de traitement 312 est émis vers les sources, plus particulièrement ici au sous-module de conversion 314.

En émission, le sous-module de conversion 314 est apte à recevoir le signal émis par le sous-module de traitement, à le convertir en signal analogique et à les transmettre aux sources, ici par l'intermédiaire d'un bloc d'amplification.

Un procédé d'utilisation d'une antenne 10 selon l'invention va maintenant être décrit.

Le procédé d'utilisation comprend les étapes suivantes :

- génération d'une loi de modulation d'amplitude par le module de formation de faisceaux 14 pour former au moins un faisceau,
- émission ou réception d'un signal par les éléments rayonnants, et
- application de la loi de modulation d'amplitude généré au signal reçu ou à émettre par les éléments rayonnants.

Le procédé d'utilisation comprend, par exemple, en outre la génération d'une loi de modulation de phase par le module de formation de faisceaux pour former l'au moins un faisceau, et l'application du déphasage correspondant au signal reçu ou à émettre par les éléments rayonnants.

Lorsqu'une pluralité de faisceaux sont formés simultanément, la loi de modulation d'amplitude générée, et le cas échéant la loi de modulation de phase générée, correspond(ent) à la superposition de sous-lois de modulation d'amplitude, et le cas échéant de sous-lois de modulation de phase, pour former chaque faisceau

Plus particulièrement, en réception, les sources 12 reçoivent un signal et le transmettent au module de génération de faisceaux 14, par exemple par l'intermédiaire du bloc d'amplification 16.

Le module de génération de faisceaux 14 applique la loi de modulation d'amplitude générée, et le cas échéant la loi de modulation de phase générée, au signal reçu.

Plus particulièrement, le sous-module de conversion 314 reçoit le signal transmis par les sources, par exemple amplifiés et/ou filtrés, le numérise et le transmette au sous-module de traitement 312.

Le sous-module de traitement 312 reçoit le signal transmis par les sources, ici converti par le sous-module de conversion 314, et leur applique la loi de modulation d'amplitude, et le cas échéant la loi de modulation de phase, correspondant au(x) faisceau(x) à former.

En émission, le module de formation de faisceaux 14 génère la loi de modulation d'amplitude, et le cas échéant la loi de modulation de phase, correspondant au(x) faisceau(x) à former, et transmet aux sources le signal auquel est appliqué la ou les lois. Chaque source 12 émet alors un signal avec une amplitude à laquelle le coefficient de modulation d'amplitude correspondant est appliqué, et le cas échéant avec le déphasage correspondant.

Plus particulièrement, le sous-module de traitement 312 génère la loi de modulation d'amplitude, et le cas échéant la loi de modulation de phase, correspondant au(x) faisceau(x) à former et émet un signal correspondant auquel a été appliqué la loi de modulation d'amplitude, et le cas échéant la loi de modulation de phase.

Le signal émis par le sous-module de traitement 312 est émis vers les sources, plus particulièrement ici au sous-module de conversion 314.

Le sous-module de conversion 314 reçoit le signal émis par le sous-module de traitement, le convertit en signal analogique et le transmet à chaque source, ici par l'intermédiaire du bloc d'amplification correspondant.

Chaque source 12 émet alors un rayonnement avec une amplitude à laquelle le coefficient de modulation d'amplitude correspondant est appliqué, et le cas échéant avec le déphasage correspondant.

Une antenne selon l'invention permet d'orienter le faisceau sans réaliser un déphasage adapté pour adapter le pointage du faisceau. En effet, le dépointage est réalisé en premier lieu en activant différemment, en amplitude, les éléments rayonnants du réseau. Cela évite les désavantages soulevés pour un réseau antennaire plan classique.

La maille est susceptible d'être élargie sans créer de lobe de réseau, ce qui permet, par exemple, d'avoir une même directivité pour un nombre d'éléments rayonnants réduit.

La conformation permet également de présenter une surface plus importante dans la direction souhaitée. Ainsi, pour une forte élévation, la projection de la surface antennaire permet une directivité plus importante.

Enfin, le fait de ne pas appliquer de loi de déphasage au premier ordre pour orienter le faisceau limite l'effet de strabisme en bord de bande.

**Revendications**

1. Antenne (10) comprenant une pluralité de sources (12), chaque source (12) comprenant un élément rayonnant (110 ; 210), chaque élément rayonnant (110 ; 210) présentant un axe principal de rayonnement (X1, Xn, Xi, Xj) respectif, chaque axe principal de rayonnement (X1, Xn, Xi, Xj) respectif présentant une inclinaison avec un axe de référence (Y), l'axe de référence (Y) étant commun à la pluralité de sources (12), l'inclinaison des axes principaux de rayonnement (X1, Xn, Xi, Xj) respectifs variant au sein de l'antenne (10), l'antenne (10) comprenant un module de formation de faisceaux (14) relié aux sources (12), le module de formation de faisceaux (14) étant apte à contrôler les éléments rayonnants pour former au moins un faisceau,

**caractérisé en ce que** le module de formation de faisceaux (14) est apte à générer et à appliquer une loi de modulation d'amplitude aux éléments rayonnants (110 ; 210), la loi de modulation d'amplitude dépendant du ou des faisceaux à former, la loi de modulation d'amplitude comprenant un coefficient de modulation d'amplitude pour chaque élément rayonnant (110 ; 210), de sorte que chaque élément rayonnant (110 ; 210) émet un signal présentant une amplitude respective égale à une amplitude donnée modulée par le coefficient de modulation d'amplitude correspondant ou reçoit un signal présentant une amplitude respective, le coefficient de modulation d'amplitude correspondant étant appliqué à l'amplitude respective après réception,
l'antenne comprenant une pluralité de raccords (20), chaque raccord (20) connectant une source (12) respective à un module, les sources (12) et les raccords (20) étant réalisés par fabrication additive.

2. Antenne selon la revendication 1, dans laquelle les éléments rayonnants (110) sont agencés tels que les axes principaux de rayonnement (X1, Xn, Xi, Xj) sont chacun tangents à une unique courbe tridimensionnelle présentant une symétrie de révolution autour de l'axe de référence (Y), la courbe tridimensionnelle étant représentative d'une fonction polynôme dans tout plan passant par l'axe de référence (Y), ou dans laquelle les éléments rayonnants (210) sont agencés, de sorte que chaque élément rayonnant (210) est une image par translation parallèlement à l'axe de référence (Y) d'un élément rayonnant fictif correspondant, les éléments rayonnants fictifs étant tels que leurs axes principaux de rayonnement sont chacun tangents à une unique courbe tridimensionnelle présentant une symétrie de révolution autour de l'axe de référence (Y), la courbe tridimensionnelle étant représentative d'une fonction polynôme dans tout plan passant par l'axe de référence (Y).

3. Antenne selon la revendication 1 ou 2, dans laquelle le module de formation de faisceaux (14) est apte à générer la loi de modulation d'amplitude en fonction de la direction principale du ou des faisceaux à former.

4. Antenne selon l'une quelconque des revendications 1 à 3, dans laquelle le module de formation de faisceaux (14) est apte à générer et à appliquer une loi de modulation de phase aux éléments rayonnants (110 ; 210), la loi de modulation de phase dépendant du ou des faisceaux à former, la loi de modulation de phase comprenant un déphasage pour chaque élément rayonnant (110 ; 210), de sorte que chaque élément rayonnant (110 ; 210) émet un signal présentant le déphasage correspondant ou reçoit un signal auquel est appliqué le déphasage.

5. Antenne selon l'une quelconque des revendications 1 à 4, dans laquelle le module de formation de faisceaux (14) est numérique.

6. Antenne selon l'une quelconque des revendications 1 à 5, dans laquelle l'antenne (10) est apte à générer un faisceau présentant une fréquence comprise entre 1 GHz et 44 GHz.

7. Procédé d'utilisation d'une antenne (10) selon l'une quelconque des revendications 1 à 6, comprenant les étapes suivantes :

   - génération d'une loi de modulation d'amplitude par le module de formation de faisceaux (14) pour former au moins un faisceau,
   - émission ou réception d'un signal par les éléments rayonnants (110 ; 210), et
   - application de la loi de modulation d'amplitude générée au signal reçu ou à émettre par les éléments rayonnants (110 ; 210).

8. Procédé d'utilisation selon la revendication 7, comprenant la génération d'une loi de modulation de phase par le module de formation de faisceaux (14) pour former l'au moins un faisceau, et l'application du déphasage correspondant au signal reçu ou émis par chaque élément rayonnant (110 ; 210).

9. Procédé d'utilisation selon la revendication 7 ou 8, dans laquelle une pluralité de faisceaux sont formés simultanément, la loi de modulation d'amplitude générée correspondant à la superposition de sous-lois de modulation d'amplitude pour former chaque faisceau.

# FIG.1

## FIG.2

$Y$

$X_j$

$X_i$

210

FIG.3

260

## FIG.4

## FIG.5

Europäisches
Patentamt

European
Patent Office

Office européen
des brevets

**RAPPORT DE RECHERCHE EUROPEENNE**

Numéro de la demande

EP 25 22 6680

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2018/013210 A1 (ROSENKRANTZ MARK [IL] ET AL) 11 janvier 2018 (2018-01-11) * figure 2 * * alinéas [0022], [0044], [0045], [0056], [0059], [0062] * ----- | 1-9 | INV. H01Q3/28 H01Q3/34 H01Q21/06 H01Q21/20 H01Q1/28 |
| X | CN 113 054 436 A (UNIV SOUTHEAST) 29 juin 2021 (2021-06-29) * alinéas [0005], [0008], [0036] * ----- | 1-9 | |

**DOMAINES TECHNIQUES RECHERCHES (IPC)**

H01Q

Le présent rapport a été établi pour toutes les revendications

| Lieu de la recherche | Date d'achèvement de la recherche | Examinateur |
|---|---|---|
| La Haye | 19 mai 2026 | Taddei, Ruggero |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

  .................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 25 22 6680

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

19-05-2026

| Document brevet cité au rapport de recherche | Date de publication | Membre(s) de la famille de brevet(s) | Date de publication |
|---|---|---|---|
| US 2018013210 A1 | 11-01-2018 | CA 2970990 A1 | 07-01-2018 |
| | | EP 3267532 A1 | 10-01-2018 |
| | | KR 20180006294 A | 17-01-2018 |
| | | SG 10201705032W A | 27-02-2018 |
| | | US 2018013210 A1 | 11-01-2018 |
| CN 113054436 A | 29-06-2021 | AUCUN | |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20130234890 A1